# EUROPÄISCHE PATENTSCHRIFT

(11) **EP 0 738 530 B1**
(45) Veröffentlichungstag und Bekanntmachung des Hinweises auf die Patenterteilung: **02.01.2002**
(21) Anmeldenummer: 95201000.7
(22) Anmeldetag: 20.04.1995
(51) Int. Cl.: B01D 29/01, B01D 29/11

(54) **Vorrichtung zum Entfernen von Feststoffen aus einer Flüssigkeit**
Device for removing solids from a liquid
Dispositif pour enlever des matières solides d'un liquide

(43) Veröffentlichungstag der Anmeldung: 23.10.1996
(73) Patentinhaber: Speelziek, Marinus, NL-6676 LA Homoet (NL); Speelziek, Gijsbertus, NL-6667 AL Herveld (NL)
(72) Erfinder: Speelziek, Marinus, NL-6676 LA Homoet (NL); Speelziek, Gijsbertus, NL-6667 AL Herveld (NL)
(74) Vertreter: Bakker, Gilles Egbert, Ir.

(56) Entgegenhaltungen:
- EP-A- 0 395 044
- EP-A- 0 418 750
- DE-A- 4 107 432
- FR-A- 352 616
- FR-A- 2 224 590
- FR-A- 2 321 456

## Beschreibung

Die Erfindung bezieht auf eine Vorrichtung zum Entfernen von Feststoffen aus einer Flüssigkeit, versehen mit einer Zufuhr für die die Feststoffe enthaltende Flüssigkeit, einer Siebtrommel mit einer sich entlang der Sieboberfläche bewegenden Forderschnecke, einer Abfuhr für die Feststoffen und einer Abfuhr für die Flüssigkeit.

Eine solche Vorrichtung ist bekannt durch DE-A 252.371 oder FR-A-2.321 456. Bei dieser bekannten Vorrichtung wird die die Feststoffe enthaltende Flüssigkeit zentral zugeführt und wird die Flüssigkeit in zwei Bereichen aus der Siebtrommel gestaut, während die Feststoffe sich gegen ein federbelastetes Kegelventil bewegen und dieses bei einem vorbestimmten Druck eröffnen.

Eine solche Vorrichtung hat den Nachteil eine relativ grosse Länge zu benötigen, doch der wichtigste Nachteil ist dass das Abfuhrventil für die Feststoffe, trotz der Tatsache dass eine Adjustiermöglichkeit besteht, in der Praxis immer zur Verstopfung führt, die eine ernsthafte Betriebsunterbrechung mit sich bringen.

Eine mit dem im Anfang erwähnte Vorrichtung übereinstimmenden Vorrichtung ist auch bekannt durch die US-A 3,698,558. Bei dieser bekannten Vorrichtung besteht das Abfuhrventil für die Feststoffe unter einer adjustierbaren Federbelastung. Auch dieses führt in der Praxis zu Verstopfungen.

Die Erfindung bezweckt eine Vorrichtung des genannten Typus zu erschaffen, die in der Praxis geeignet ist zum Entfernen von Feststoffen aus Mist. In der Praxis werden im Mist Gras, Stroh, Fäden, Nachgeburten und Steinen gefunden. Es hat sich heraus gestellt, dass Gras und Stroh, die ziemlich häufig vorkommen, Klumpen oder Klötze bilden, die nur sehr schwierig zu zerschneiden sind, wenigstens ist den Anmeldern kein einziges Gerät bekannt, das dieses in befriedigender Weise tut.

Bei der Zufuhr von Mist an die Mistinjektore tritt dann auch in der Praxis der Nachteil auf, dass immer die Kanäle und die unterirdischen Einspritzöffnungen verstopft werden. Dieses führt zu einer unregelmässigen Verteilung des Mistes in dem Boden und zu einer Erniedrigung der Leistung des Injektors. Ernsthafter ist jedoch, dass beträchtliche Betriebsunterbrechungen auftreten zur Beseitigung dieses Uebels.

Auch hat sich herausgestellt, dass für andere Zwecke, zum Beispiel Abfallöle, in dieser Hinsicht ein Problem besteht. Es hat sich zum Beispiel herausgestellt, dass Abfallöl Kunststoff Folien und/oder Beutel enthalten kann und dass diese unwiderruflich in der bekannten Apparatur zur Abscheidung von Feststoffen zu einer Abschliessung führen.

Die Erfindung bezweckt die obenerwähnten Schwierigkeiten zu beheben und dabei eine einfache, kompakte Vorrichtung vorzusehen.

Diese Zwecke werden erfindungsgemäss erreicht durch vorzusehen, dass die Abfuhr für die Feststoffe im Betrieb der Vorrichtung offen ist.

Die vorliegende Erfindung umfaßt eine Vorrichtung zum Entfernen von Feststoffen aus Mist, versehen mit einer Siebtrommel (3,4,5,6) mit einer sich entlang der Sieboberfläche bewegender Förderschnecke (7), einer Zufuhr (2) für den die Feststoffe enthaltende Mist, wobei die Zufuhr (2) für den die Feststoffen enthaltende Mist mit einer Eintrittskammer (12) verbunden ist, die in Verbindung mit einem Teil der Oberfläche der Siebtrommel ist, einer Abfuhr für die Feststoffe (8) mit einer konvergierenden Abführöffnung, und einer Abfuhr für die Flüssigkeit die mit einer Abfuhrkammer verbunden ist, die in Verbindung mit einem perforierten Teil der Oberfläche der Siebtrommel ist **dadurch gekennzeichnet,** dass die Eintrittskammer (2) und die Abfuhrkammer (13) einander gegenüber liegen im Bezug auf die Welle (10) der Siebtrommel und dass die Wand des zulaufenden Teil der Abfuhröffnung (8) eine Ecke im Bezug auf die Schneckewelle von 35°-55° hat und dass der Radius der Abfuhröffnung für die Feststoffe 55 bis 35% des Radiuses der Trommel bevor dem zulaufenden Teil beträgt.

Es hat sich herausgestellt, dass mit einer erfindungsgemässen Vorrichtung eine zuverlässige Entfernung der Feststoffe bekommen werden kann, ohne dass das Ganze verstopft oder dass die Flüssigkeit noch Feststoffe oder Klumpen enthält, die zur Verstopfung von weiteren Apparatur, wie Mistinjektore, führen können.

Gemäss einer näheren Ausarbeitung der Erfindung kann vorgesehen werden, dass die Zufuhr für die die Feststoffe enthaltende Flüssigkeit mit einer Eintrittskammer verbunden ist, die in Berührung mit einem Teil der Oberfläche der Siebtrommel ist, dass die Abfuhr der Flüssigkeit mit einer Abfuhrkammer verbunden ist, die in Berührung mit einer anderen Teil der Oberfläche der Siebtrommel ist und dass die Abfuhr für die Feststoffe mit dem Inneren der Siebtrommel verbunden ist. Dabei liegen die Eintrittskammer und die Abfuhrkammer vorzugsweise einander gegenüber im Bezug auf die Welle der Siebtrommel, wobei das Abfuhrende für die Feststoffe in an sich bekannter Weise in der Verlängerung dieser Welle liegt.

Bei der Erfindung wird vorzugsweise vorgesehen, dass die Schnecke über einen Teil ihrer Länge entlang einer festen perforierten Siebtrommel bewegt und über einen anschliessenden Teil entlang einer dichten Wand. In dieser Hinsicht wird darauf hingewiesen, dass dieses Kennzeichen an sich bekannt ist unter Anderen aus der genannten DE-A 252.371 oder der US-A-3,698,558.

Gute Erfolge sind bekommen mit einer Abfuhröffnung, die einen zulaufenden Teil hat mit einer Ecke der Wand hinsichtlich der Schneckewelle von 35°-55°.

Auch hat sich herausgestellt, dass hierbei gute Erfolge bekommen werden, wenn der Radius der Abfuhröffnung für die Feststoffe 55 bis 35% des Radius der Trommel bevor dem zulaufenden Teil beträgt.

Im Allgemeinen liegt die Abfuhr für die Feststoffe in der Verlängerung der Schnecke und der Schneckewelle. Dabei ist es notwendig, dass die Schnecke bevor der Öffnung endet, weil sonst keiner Abschliesspropfen bekommen werden kann. Jedoch ist es so, dass, wenn einmal einer Abschliesspropfen bekommen ist, langfristige zuverlässige Wirkung möglich ist unter Ausstoss der Feststoffe.

Die Erfindung umfasst auch eine Vorrichtung zum Entfernen von Feststoffen aus einer Flüssigkeit, versehen mit einer Schnecke, die innerhalb einer Siebtrommel liegt und Feststoffe zu eine Abfuhr nach vorne drängt, welche dadurch gekennzeichnet wird, dass eine Zufuhr für die Feststoffe enthaltende Flüssigkeit mittels einer Öffnung mit den Innere der Siebtrommel verbunden ist und dass das Innere der Siebtrommel mittels einer perforierten Oberfläche mit der Abfuhr der Flüssigkeit verbunden ist, derart dass die Flüssigkeitsströmung und die Bewegung der Feststoffe in der Schnecke gegenseitig quer gerichtet sind.

Schliesslich umfasst die Erfindung auch ein Verfahren zum Betreiben einer Vorrichtung wie im Vorhergehenden beschrieben, welches Verfahren dadurch gekennzeichnet wird, dass die Zufuhr für die die Feststoffe enthaltende Flüssigkeit auf einen höheren Druck gebracht wird als die Abfuhr der Flüssigkeit und dass die Abfuhr für die Feststoffe gehindert oder abgeslossen wird bis einer festen Propfen gebildet worden ist. Der höhere Druck der Zufuhr hinsichtlich der Abfuhr kann selbstverständlich bekommen werden durch der Letzte einen Unterdruck zu geben.

Die Erfindung wirdt im Folgenden näher erörtert an Hand der Zeichnung, in welcher:

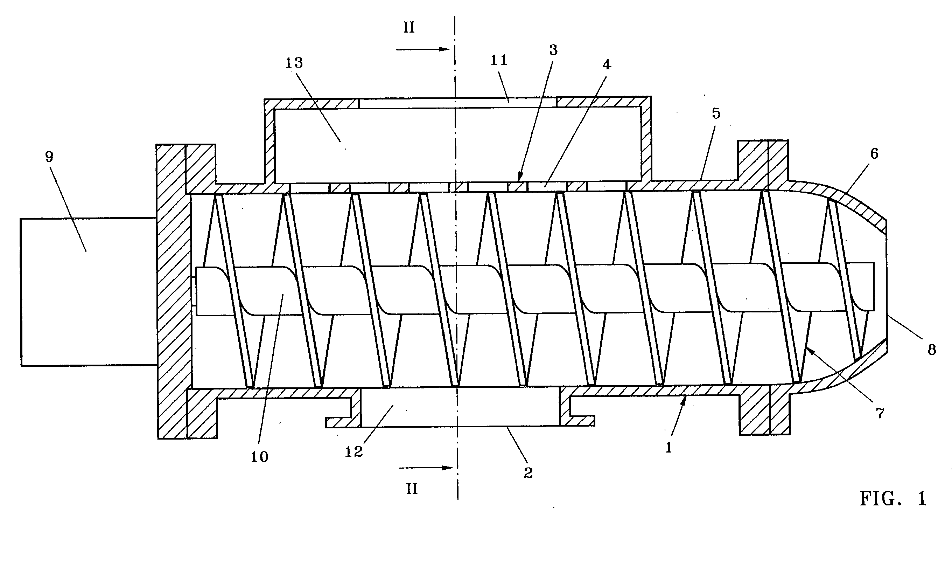

Fig. 1 schematisch einen Längschnitt durch die erfindungsgemässe Vorrichtung zeigt; und

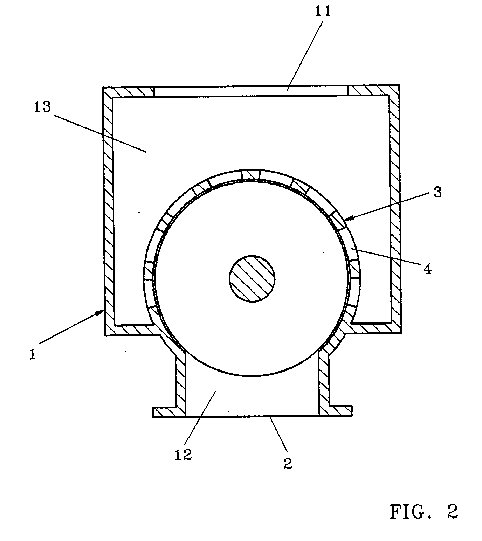

Fig. 2 einen Durschnitt über die Linie II-II in Fig. 1 zeigt.

In der Zeichnung ist mit 1 ein Schneckemantel oder Siebtrommeloberfläche angedeutet, die bei 2 eine Öffnung hat, die sich einer Kammer 12 anschliesst und bei 3 über einen Teil seines Umfangs, der vorzugsweise etwas grösser ist als der halbe Umfang, mit Löchern 4 versehen ist, die in einem Kammer 13 mit einer Abfuhröffnung 11 münden. Die Siebtrommel oder der Schneckemantel hat weiter eine geschlossene Oberfläche 5. An dieser Oberfläche ist eine hauptsächlich kegelförmige Abfuhr 6 angeordnet, die eine freie Öffnung 8 hat. Zum Anlaufen der Vorrichtung kann diese Öffnung zeitweilig abgeslossen werden, doch wenn die Vorrichtung im Betrieb ist bildet sich ein Propfen der Feststoffe, der, wie der Praxis gezeigt hat, Sorge trägt für eine permanente Abdichtung unter Hinausbeförderung eines etwas plastischen Konglomerats von Feststoffen.

Innerhalb der Teile 4 und 6 befindet sich eine Schecke 7, deren Umriss der Form der Teile 4 und 6 dereart angepasst ist, dass die Schnecke in an sich bekannter Weise sich so nahe der Oberfläche bewegt, dass diese rein gehalten wird und die Feststoffe zu deren Abfuhr bewegt werden.

Die Welle 10 der Schnecke 7 wird durch einen Hydromotor 9 angetrieben, doch kann in der Praxis jeder andere Antrieb, wie eine Elektromotor mit einer Reduktor, eine Abzweigwelle eines Traktors und so weiter, benutzt werden.

Aus der Zeichnung stellt sich heraus, dass die Schnecke 7 und die Schneckewelle 10 kurz bevor der freien Öffnung 8 enden. Hierbei soll das eine und das andere derart eingerichtet sein, dass ein Abschliesspropfen übrigbleibt, doch kan das zu weit zurückliegen der Schnecke 7 hinsichtlich der Öffnung 8 dazu führen, dass eine so grosse Kraft notwendig ist, dass die Schnecke unnötig schwer oder sogar zu schwer belastet wird. Der bevor der Öffnung 8 zusammengepresste Propfen gibt Flüssigkeit ab, die entgegen der Förderrichtung der Schnecke zu dem Abfuhröffnungen 4 strömt.

## Patentansprüche

1. Vorrichtung zum Entfernen von Feststoffen aus Mist, versehen mit einer Siebtrommel (3,4,5,6) mit einer sich entlang der Sieboberfläche bewegender Förderschnecke (7), einer Zufuhr (2) für den die Feststoffe enthaltende Mist, wobei die Zufuhr (2) für den die Feststoffen enthaltende Mist mit einer Eintrittskammer (12) verbunden ist, die in Verbindung mit einem Teil der Oberfläche der Siebtrommel ist, einer Abfuhr für die Feststoffe (8) mit einer konvergierenden Abführöffnung, wobei die Förderschnecke vor der Abfuhröffnung (8) endet, und einer Abfuhr für die Flüssigkeit die mit einer Abfuhrkammer verbunden ist, die in Verbindung mit einem perforierten Teil der Oberfläche der Siebtrommel ist **dadurch gekennzeichnet, dass** die Eintrittskammer (2) und die Abfuhrkammer (13) einander gegenüber liegen im Bezug auf die Welle der Förderschnecke (10) der Siebtrommel und dass die Wand des zulaufenden Teil der Abfuhröffnung (8) eine Ecke im Bezug auf die Schneckewelle von 35°-55° hat und dass der Radius der Abfuhröffnung für die Feststoffe 55 bis 35% des Radiuses der Trommel bevor dem zulaufenden Teil beträgt.

2. Vorrichtung nach Anspruch 1, **dadurch gekennzeichnet, dass** sich die Schnecke über einen Teil ihrer Länge entlang einer festen perforierten Siebtrommel (3,4) und der anschliessenden Teil ihrer Länge sich entlang einer dichten Wand (5) bewegt.

3. Vorrichtung nach Ansprüche 1-2, **dadurch gekennzeichnet, dass** die Schnecke (7) und die Schneckewelle (10) entfernt liegen der offen Abfuhr der Feststoffe mit einer Entfernung von weniger als die Hälfte des Radius dieser Oeffnung.

4. Vorrichtung nach Ansprüche 1-3, **dadurch gekennzeichnet, dass** die Kammer (2) für die Zufuhr von Flüssigkeit mit Feststoffe in offener Verbindung steht mit dem Inneren der Siebtrommel.

## Claims

1. Device for removing solids from manure, provided with a drum screen (3, 4, 5, 6), having a screw conveyor (7) moving along the screen surface, a supply (2) for the manure containing the solids, said supply (2) for the manure containing solids being connected to an inlet chamber (12) communicating with part of the surface of said drum screen, a discharge (8) for the solids having a converging outlet, said screw conveyor ending in front of said outlet (8) and a discharge for the liquid connected with a discharge chamber communicating with a perforated portion of the drum screen surface, **characterized in that** the inlet chamber (2) and the discharge chamber (13) are opposite each other in relation to the screw conveyor shaft (10) of the drum screen and that the wall of the tapered portion of the outlet (8) has an angle of 35° - 55° in relation to the screw shaft, and that the radius of the outlet for the solids is 55 to 35% of the radius of the drum in front of the tapered portion.

2. Device according to claim 1, **characterized in that** the screw moves along a fixed perforated drum screen (3, 4) across a part of its length and the following part of its length moves along a closed wall (5).

3. Device according to claims 1 and 2, **characterized in that** the screw (7) and the screw shaft (10) are spaced from the solids outlet with a distance of less than half the radius of said outlet.

4. Device according to claims 1 - 3, **characterized in that** the chamber (2) for the supply of liquid containing solids is in open communication with the interior of the screen drum.

## Revendications

1. Dispositif pour éliminer des matières solides d'un fumier, équipé d'un tambour filtrant (3, 4, 5, 6) muni d'une vis transporteuse (7). qui se déplace le long de la surface filtrante, d'une arrivée (2) pour le fumier contenant les matières solides, dans lequel l'arrivée (2) pour le fumier contenant les matières solides est reliée à une chambre d'entrée (12) qui est en communication avec une partie de la surface du tambour filtrant, d'une sortie (8) pour les matières solides qui comprend une ouverture de sortie convergente, la vis transporteuse se terminant en amont de l'ouverture de sortie (8), et d'une sortie pour le liquide qui est reliée à une chambre de sortie, laquelle est en communication avec une partie perforée de la surface du tambour filtrant, **caractérisé en ce que** la chambre d'entrée (2) et la chambre de sortie (13) sont disposées l'une à l'opposé de l'autre par rapport à l'arbre (10) de la vis transporteuse du tambour filtrant, **en ce que** la paroi de la partie affluant à l'ouverture de sortie (8) forme un angle de 35-55 ° par rapport à l'arbre de la vis et **en ce que** le rayon de l'ouverture de sortie pour les matières solides représente 55 à 35% du rayon du tambour en amont de la partie affluente.

2. Dispositif selon la revendication 1, **caractérisé en ce que** la vis se déplace sur une partie de sa longueur le long d'un tambour filtrant perforé fixe (3, 4) et la partie suivante de sa longueur se déplace le long d'une paroi étanche (5).

3. Dispositif selon les revendications 1-2, **caractérisé en ce que** la vis (7) et l'arbre (10) de la vis sont éloignés de la sortie ouverte des matières solides,. d'une distance de moins de la moitié du rayon de cette ouverture.

4. Dispositif selon les revendications 1-3, **caractérisé en ce que** la chambre (2) pour l'arrivée du liquide contenant des matières solides est en communication directe avec l'intérieur du tambour filtrant.
